# EUROPÄISCHE PATENTANMELDUNG

(11) **EP 2 278 174 A2**
(43) Veröffentlichungstag der Anmeldung: **26.01.2011**
(21) Anmeldenummer: 10169809.0
(22) Anmeldetag: 16.07.2010
(51) Int. Cl.: F16B 13/12

(54) **Befestigungseinrichtung**

(30) Priorität: 22.07.2009 DE 102009026219
(71) Anmelder: Horst Filipp GmbH, 32130 Enger-Oldinghausen (DE)
(72) Erfinder: Filipp, Horst, 33824, Werther (DE)
(74) Vertreter: Dantz, Jan Henning

(57) **Zusammenfassung**

Eine Befestigungseinrichtung, mit einem zumindest einen Längsschlitz (5) aufweisenden Dübel (1), der mit einem bereichsweise gleichbleibenden Innengewinde (3) versehen ist, in das in Funktion eine mit einem zylindrischen Gewindeschaft versehene Spreizschraube (2) eingedreht ist, die dabei über die gesamte oder nahezu gesamte Länge des Innengewindes (3) in Eingriff steht, ist so ausgebildet, dass das Innengewinde (3) mit gleichem Nenndurchmesser wie der Gewindeschaft (4) als Vorstufengewinde mit nicht vollständig ausgeprägten Gewindegängen ausgebildet ist.

## Beschreibung

Die Erfindung betrifft eine Befestigungseinrichtung nach dem Oberbegriff des Anspruchs 1.

Eine derartige Befestigungseinrichtung ist beispielsweise aus der DE 100 52 662 A1 bekannt.

Darin ist ein Dübel als Bestandteil der Befestigungseinrichtung gezeigt und beschrieben, der ein gleichbleibend kleineres Innengewinde aufweist als eine eindrehbare Spreizschraube.

Prinzipiell hat sich diese Befestigungseinrichtung bewährt, da, im Gegensatz zu anderen, vornehmlich gattungsfremden Befestigungseinrichtungen, der in eine Bohrung, beispielsweise in einem Vollstein, eingesteckte Dübel nach einem Eindrehen der Spreizschraube mantelseitig vollffächig an die Laibung der Bohrung gepresst wird, ausgenommen lediglich der äußerst schmale Bereich der Längsschlitze.

Dadurch wird eine außergewöhnlich hohe Belastbarkeit, insbesondere hinsichtlich einwirkender Zugkräfte, erreicht.

Demgegenüber sind Spreizdübel bekannt, die endseitig durch angreifende Spreizkonen aufgespreizt werden, wobei dann lediglich diese aufgespreizten Bereiche zur Anlage an der Lochlaibung kommen, wodurch naturgemäß eine gegenüber dem gattungsbildenden Stand der Technik eingeschränkte Belastbarkeit gegeben ist.

Bei der gattungsgemäßen Befestigungseinrichtung, wie sie aus der DE 100 52 662 A1 bekannt ist, ist zum Eindrehen der Spreizschraube im Dübel ein Gewindeabschnitt vorzusehen, der in seinem Nenndurchmesser dem der Spreizschraube entspricht, während, wie erwähnt, der übrige Gewindebereich ein im Durchmesser kleineres Gewinde aufweist.

Es sind also zwei in ihrem Nenn-Durchmesser unterschiedliche Innengewinde vorzusehen, was naturgemäß mit einem entsprechenden Fertigungsaufwand verbunden ist.

Es gehen daher Forderungen dahin, die Fertigung zu optimieren und dadurch die Herstellungskosten zu senken, zumal solche Befestigungseinrichtungen als Massenartikel in großen Stückzahlen hergestellt werden.

Der Erfindung liegt die Aufgabe zugrunde, eine Befestigungseinrichtung der gattungsgemäßen Art so weiterzuentwickein, dass ihre Verwendungsfähigkeit verbessert, die Belastbarkeit erhöht und eine einfachere und kostengünstigere Herstellung möglich ist.

Diese Aufgabe wird durch eine Befestigungseinrichtung mit den Merkmalen den Anspruchs 1 gelöst.

Die neue Befestigungseinrichtung zeichnet sich durch eine ganze Reihe von Vorteilen aus. So ist zunächst einmal auf die vereinfachte Herstellung hinzuweisen, da im Wesentlichen das Innengewinde lediglich aus einem Abschnitt mit gleichem Nenndurchmesser wie der Gewindeschaft der Spreizschraube besteht.

Prinzipiell kann das erfindungsgemäß als Vorstufengewinde mit nicht vollständig ausgeprägten Gewindegängen ausgebildete Innengewinde mit einem Werkzeug hergestellt werden, wohingegen bei einem Dübel nach dem Stand der Technik, wie beschrieben, der Anfangsbereich des Innengewindes als separates Gewinde im Durchmesser größer ist, so dass die einzusetzende Spreizschraube beim Eindrehen greifen kann.

Um dies auch bei der neuen Befestigungseinrichtung zu erreichen, ist nach einer vorteilhaften Weiterbildung der Erfindung vorgesehen, einen Anfangsbereich des Innengewindes vollständig auszubilden, während sich der nicht vollständig ausgebildete Bereich des Innengewindes anschließt.

Die nicht vollständige Ausprägung des Innengewindes kann durch einen gegenüber dem Gewindeschaft der Spreizschraube geringeren Flankendurchmesser oder durch eine geringere Tiefe der Gewindegänge hergestellt sein, wodurch das voll ausgeprägte vorzugsweise Norm-Gewinde der Spreizschraube zu einer Aufweitung, d.h., Aufspreizung des Dübels führt.

Entscheidend dabei ist auch die Längsschlitzung des Dübels, wobei prinzipiell ein durchgehender Längsschlitz ausreicht, um die gewünschte Spreizwirkung zu erzielen.

Nach einem weiteren Gedenken der Erfindung ist allerdings vorgesehen, von beiden Endseiten her Schlitze einzubringen, die so weit axial geführt sind, dass ihre Enden umfänglich fluchten. Bevorzugt sollten sich die Längsschlitze jedoch bis zur teilweisen Überlappung erstrecken.

Im Übrigen wird eine besonders gute Spreizwirkung erreicht, wenn von jedem Endbereich ausgehend mindestens zwei sich gegenüberliegende Längsschlitze vorgesehen sind, die jeweils versetzt zu den Längsschlitzen der gegenüberliegenden Seite angeordnet sind, bevorzugt um 90°.

Wie sich überraschend gezeigt hat, erfolgt gleich zu Beginn des Eindrehens der Spreizschraube eine Spreizung des Dübels über die gesamte Mantelfläche, so dass eine vollflächige Anlage an der Lochlaibung erreicht wird.

Hierdurch kann der Dübel vorgespannt werden, wodurch sich eine bessere und einfachere Montage von mit der Befestigungseinrichtung zu fixierenden Bauteilen ergibt. Dabei liegt der Dübel insoweit reibschlüssig an der Lochlaibung an, dass ein auch mehrfaches Herausdrehen der Spreizschraube nicht zu einer Lockerung des Dübels führt.

Das Eindrehen der Spreizschraube gestaltet sich insoweit besonders einfach, da ein Mitdrehen des Dübels beim Eindrehen der Spreizschraube, wie dies bei bekannten Dübeln häufig der Fall ist, ausgeschlossen ist.

Auch hinsichtlich der Positionierung des Dübels beispielsweise in einem Profil oder einem Stein, ergeben sich durch die vollflächige Anlage des Dübels an der jeweiligen Bohrungswand Vorteile, da der Dübel durchaus aus der Bohrung herausragen kann, beispielsweise um daran Beschläge oder dergleichen zu verspannen.

Ein weiterer Gedanke der Erfindung sieht vor, dass der Dübel einen von der Kreisform abweichenden Querschnitt aufweist, beispielsweise einen mehreckigen, prinzipiell aber auch einen elliptischen oder dergleichen. Dadurch ist der Dübel besonders geeignet in weichere Materialien eingesetzt zu werden, beispielsweise zur Verankerung in Leichtbausteinen, wobei dann ein gegenüber dem größten Außenmaß des Dübels kleineres Loch in das Material eingebracht und der Dübel quasi eingetrieben wird. Hiermit ist zunächst eine Verdrehsicherung des Dübels erreicht. Beim anschließenden Eindrehen der Spreizschraube wird auch hier die volle Mantelfläche als Anpressfläche wirksam.

Zur Optimierung des Reibschlusses ist der Dübel auf seiner Mantelfläche mit einer Profilierung versehen, beispielsweise in Form einer Rändelung und/oder in Form von umlaufenden Rillen. Zweckmäßigerweise besteht der Dübel aus Metall. Denkbar sind jedoch auch andere Materialien, wie Kunststoff oder dergleichen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine an einem Bauteil montierte Befestigungseinrichtung ent- sprechend der Erfindung in einer geschnittenen Seitenansicht
- Figur 2: eine Einzelheit der Befestigungseinrichtung in einem Längs- schnitt
- Figur 3: die Einzelheit in einer Seitenansicht
- Figur 4: eine vergrößerte, schematische Darstellung eines Teilaus- schnitts der Befestigungseinrichtung.

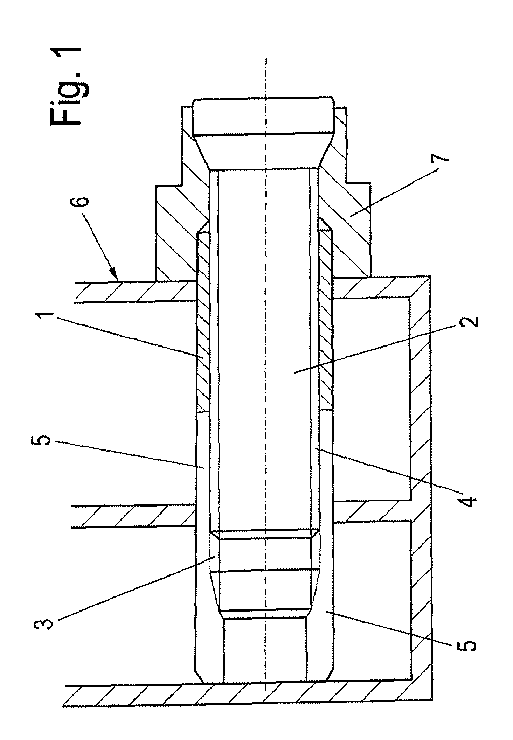

In der Figur 1 ist eine montierte Befestigungseinrichtung gezeigt, mit der ein Beschlagteil 7 an einem Profil 6 befestigbar ist.

Diese Befestigungseinrichtung besteht aus einem metallischen, mit Längsschlitzen 5 versehenen Dübel 1, der mit einem bereichsweise gleichbleibenden Innengewinde 3 versehen ist, in das eine mit einem zylindrischen Gewindeschaft 4 versehene Spreizschraube 2 eingedreht ist, wobei diese Spreizschraube 2 über nahezu die gesamte Länge des Innengewindes 3 in Eingriff steht.

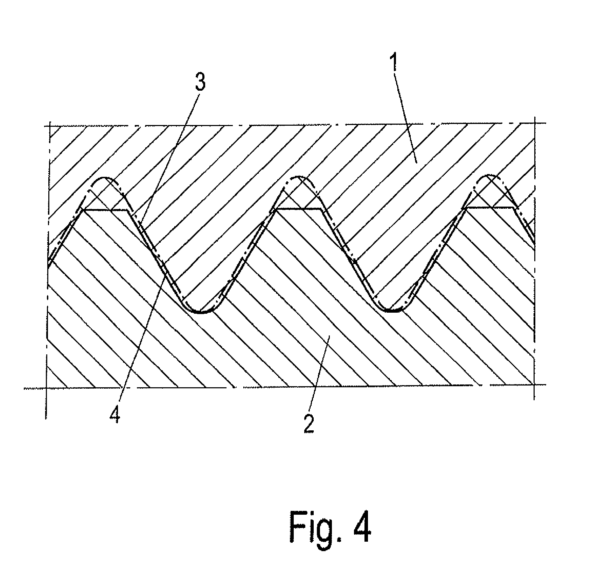

Erfindungsgemäß ist das Innengewinde 3 mit gleichem Nenndurchmesser wie der Gewindeschaft 4 als Vorstufengewinde mit nicht vollständig ausgeprägten Gewindegängen ausgebildet, was in der Figur 4 sehr deutlich zu erkennen ist, die später noch genauer beschrieben wird.

Das Profil 6 ist als Mehrkammerprofil ausgebildet, in das der Dübel 1, durch Bohrungen in dem Profil 6 geführt, hineinragt.

Zur Befestigung des Beschlagteiles 7 steht der Dübel 1 über die Außenfläche des Profiles 6 vor, wobei dieser vorstehende Bereich in einer Aufnahme des Beschlagteiles 7 positioniert ist.

Durch Einstecken in das Beschlagteil 7 und Eindrehen in den Dübel 1 wird durch die Spreizschraube 2 der Dübel 1 so gespreizt, dass seine Mantelfläche im Anlagebereich mit den Kammerwänden des Profiles 6 verspannt wird, so dass eine feste Verbindung entsteht.

Dabei wird auch der über die Außenfläche des Profiles 6 hinausragende, im Beschlagteil 7 positionierte Endbereich des Dübels 1 so verformt, dass das Beschlagteil 7 fest, insbesondere verdrehsicher gehalten ist.

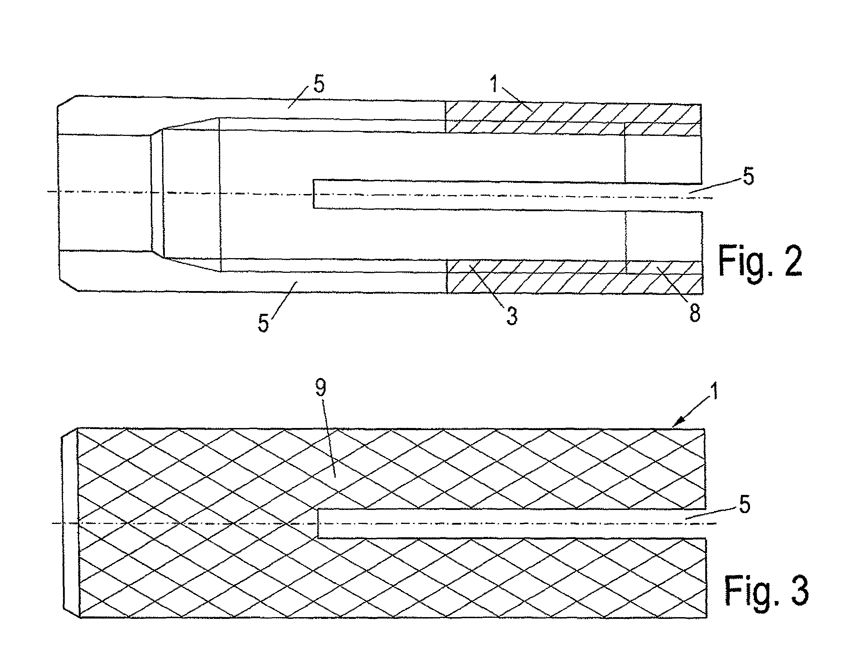

In den Figuren 2 und 3 ist der Dübel 1 als Einzelheit dargestellt, wobei erkennbar ist, dass von jeder Endseite her ausgehend jeweils zwei sich gegenüberliegende Längsschlitze 5 eingebracht sind, die um 90° versetzt zu den Längsschlitzen 5 des anderen Endes angeordnet sind.

Dabei ist die Länge der Längsschlitze 5 so bemessen, dass sie sich, wie insbesondere in der Figur 2 sehr deutlich zu erkennen ist, überlappen, so dass nach einem Eindrehen der Spreizschraube 2 die gesamte Mantelfläche gespreizt ist, selbst in einem Bereich, in dem kein Innengewinde vorgesehen ist, wie es in der Figur 2 linksseitig erkennbar ist.

Diesem Bereich gegenüberliegend ist ein Gewindeabschnitt 8 vorhanden, der im Sinne eines Muttergewindes voll ausgebildet ist, so dass die Spreizschraube 2 beim Eindrehen von dieser Seite her zunächst ohne Aufspreizen eingreifen kann, wobei zwei oder drei Gewindegänge ausreichend sind. Da hier keine Verformungskräfte zu überwinden sind, gestaltet sich das Einschrauben sehr einfach, d.h., ohne wesentlichen Kraftaufwand.

Die Mantelfläche des Dübels 1 ist, entsprechend der Figur 3 mit einer Profilierung in Form einer Rändelung 9 versehen, die einen guten Reibschluss zwischen der Wandung einer Bohrung bildet, in die der Dübel 1 eingesteckt ist.

In der Figur 4 ist ein Ausschnitt des Innengewindes 3 und des Gewindeschaftes 4 dargestellt, wobei die Gewindegänge des Innengewindes 3 in Voll-Linie und die Gewindegänge des Gewindeschaftes 4 strichpunktiert erkennbar sind.

Diese Darstellung zeigt keinen Eingriff der Gewindegänge, sondern eine Überlagerung, wie sie sich vor einem Eindrehen des Gewindeschaftes 4 in den Dübel 1 darstellt.

Es ist zu erkennen, dass das Innengewinde 3, entsprechend der Erfindung, nicht vollständig ausgeprägt ist, d.h., die Tiefen der Gewindegänge entsprechen nicht einem vollständigen Gewinde, ebenso wie die Anordnung der Flanken jedes Gewindeganges.

Bei einem Eindrehen des Gewindeschaftes 2 in den Dübel 1 liegen die Flanken der Gewindegänge des Gewindeschaftes 2 an den Flanken der unvollständig ausgeprägten Gewindegänge des Innengewindes 3 an, wodurch sich, auch unter Andruck der Spitzen der Gewindegänge an den jeweiligen Grund der Gewindegänge des Innengewindes 3, der Dübel 1 aufspreizt.

### Bezugszeichenliste

- 1: Dübel
- 2: Spreizschraube
- 3: Innengewinde
- 4: Gewindeschaft
- 5: Längsschlitz
- 6: Profil
- 7: Beschlagteil
- 8: Gewindeabschnitt
- 9: Rändelung

## Patentansprüche

1. Befestigungseinrichtung, mit einem zumindest einen Längsschlitz (5) aufweisenden Dübel (1), der mit einem bereichsweise gleichbleibenden Innengewinde (3) versehen ist, in das in Funktion eine mit einem zylindrischen Gewindeschaft versehene Spreizschraube (2) eingedreht ist, die dabei über die gesamte oder nahezu gesamte Länge des Innengewindes (3) in Eingriff steht, **dadurch gekennzeichnet, dass** das Innengewinde (3) mit gleichem Nenndurchmesser wie der Gewindeschaft (4) als Vorstufengewinde mit nicht vollständig ausgeprägten Gewindegängen ausgebildet ist.

2. Befestigungseinrichtung nach Anspruch 1, **dadurch gekennzeichnet, dass** der eine Längsschlitz (5) sich über die gesamte Länge des Dübels (1) erstreckt.

3. Befestigungseinrichtung nach Anspruch 1 oder 2, **dadurch gekennzeichnet, dass** sich an das Innengewinde (3) zur Einschrauböffnung hin ein Gewindeabschnitt (8) anschließt, der als an den Gewindeschaft (4) angepasstes Muttergewinde ausgebildet ist.

4. Befestigungseinrichtung nach einem der vorhergehenden Ansprüche, **dadurch gekennzeichnet, dass** ausgehend von den beiden Endbereichen jeweils mindestens zwei Längsschlitze (5) vorgesehen sind.

5. Befestigungseinrichtung nach einem der vorhergehenden Ansprüche, **dadurch gekennzeichnet, dass** die zwei Längsschlitze (5) einer Seite sich gegenüberliegend angeordnet sind.

6. Befestigungseinrichtung nach einem der vorhergehenden Ansprüche, **dadurch gekennzeichnet, dass** die Längsschlitze (5) einer Seite gegenüber den Längsschlitzen (5) der anderen Seite versetzt angeordnet sind, vorzugsweise um 90°.

7. Befestigungseinrichtung nach einem der vorhergehenden Ansprüche, **dadurch gekennzeichnet, dass** die Längsschlitze (5) der einen Seite mit ihrem
Ende mit dem Ende der Längsschlitze (5) der anderen Seite in Umfangsrichtung fluchten.

8. Befestigungseinrichtung nach einem der vorhergehenden Ansprüche, **dadurch gekennzeichnet, dass** sich die Längsschlitze (5) der einen Seite mit den Längsschlitzen (5) der anderen Seite überlappen.

9. Befestigungseinrichtung nach einem der vorhergehenden Ansprüche, **dadurch gekennzeichnet, dass** die Tiefe der Gewindegänge des Innengewindes (3) kleiner ist als die Tiefe der Gewindegänge des Gewindeabschnitts (8).

10. Befestigungseinrichtung nach einem der vorhergehenden Ansprüche, **dadurch gekennzeichnet, dass** der Flankenwinkel der Gewindegänge des Innengewindes (3) unterschiedlich ist gegenüber dem Flankenwinkel des Gewindeabschnitts (4).

11. Befestigungseinrichtung nach einem der vorhergehenden Ansprüche, **dadurch gekennzeichnet, dass** der Flankendurchmesser des Innengewindes (3) kleiner ist als der Flankendurchmesser des Gewindeschaftes (4).

12. Befestigungseinrichtung nach einem der vorhergehenden Ansprüche, **dadurch gekennzeichnet, dass** der Gewindeschaft (4) als Normgewinde ausgebildet ist.

13. Befestigungseinrichtung nach einem der vorhergehenden Ansprüche, **dadurch gekennzeichnet, dass** der Dübel (1) einen unrunden Querschnitt aufweist.

14. Befestigungseinrichtung nach einem der vorhergehenden Ansprüche, **dadurch gekennzeichnet, dass** der Dübel (1) im Querschnitt mehreckig ist.

15. Befestigungseinrichtung nach einem der vorhergehenden Ansprüche, **dadurch gekennzeichnet, dass** die Mantelfläche des Dübels (1) profiliert ist.
